Europäisches Patentamt

(19) European Patent Office

Office européen des brevets

(11) Numéro de publication : **0 313 437 B1**

# (12) FASCICULE DE BREVET EUROPEEN

(45) Date de publication du fascicule du brevet :
**12.06.91 Bulletin 91/24**

(51) Int. Cl.⁵ : **G01N 1/20, B01J 8/00**

(21) Numéro de dépôt : **88402578.4**

(22) Date de dépôt : **12.10.88**

(54) **Système pour le prélèvement dans une enceinte de particules solides en lit fluidisé.**

(30) Priorité : **21.10.87 FR 8714538**

(43) Date de publication de la demande :
**26.04.89 Bulletin 89/17**

(45) Mention de la délivrance du brevet :
**12.06.91 Bulletin 91/24**

(84) Etats contractants désignés :
**BE DE ES FR GB GR IT LU NL**

(56) Documents cités :
**EP-A- 0 032 064**
**DE-A- 2 800 268**
**FR-A- 2 257 329**
**FR-A- 2 317 642**
**US-A- 3 786 682**
**US-A- 4 009 618**
**US-A- 4 430 300**

(73) Titulaire : **COMPAGNIE DE RAFFINAGE ET DE DISTRIBUTION TOTAL FRANCE**
**84, rue de Villiers**
**F-92300 Levallois Perret (FR)**

(72) Inventeur : **Mauleon, Jean-Louis**
**22, Avenue de l'Abreuvoir**
**F-78160 Marly-le-Roi (FR)**
Inventeur : **Ville, François**
**64, rue de Domrémy**
**F-75013 Paris (FR)**
Inventeur : **Mengus, Charles**
**9, rue du Maréchal Leclerc**
**F-60370 Grisheim-Souffel (FR)**

(74) Mandataire : **Jolly, Jean-Pierre et al**
**Cabinet Jolly 54, rue de Clichy**
**F-75009 Paris (FR)**

## Description

La présente invention concerne un système pour le prélèvement dans une enceinte sous pression de particules solides en lit fluidisé dans un flux gazeux.

On sait que la fluidisation, c'est-à-dire le maintien en suspension dans un gaz d'un solide à l'état finement divisé, connaît de très nombreuses applications industrielles (voir l'ouvrage de Roger Dumon, "Les applications industrielles des lits fluidisés", Edition Masson, 1981). Parmi ces applications, on mentionnera en particulier le craquage en continu d'hydrocarbures en présence de grains de catalyseur en lit fluidisé, avec régénération du catalyseur usé et recyclage du catalyseur régénéré au réacteur de craquage. On pourra se référer, par exemple, à la demande de brevet FR 2 576 906, déposée au nom de la Demandresse.

On sait que l'on distingue plusieurs types de lits fluidisés, dont la nature varie en fonction de celles des fluides et des particules considérés et de la vitesse des fluides utilisés. On distingue ainsi des lits denses, des lits expansés, des lits mobiles ou bouillonnants, des lits circulant en phase fluidisée diluée etc. (voir le livre de R. Dumon précité).

Les lits fluidisés auxquels s'intéresse la présente invention sont les lits mobiles ou bouillonnants, qui sont très abrasifs du fait du mouvement dont sont continuellement animées les particules.

Par un certain nombre de propriétés, les lits fluidisés s'apparentent à des liquides, notamment par leur masse spécifique apparente, leur viscosité apparente, leur perte de charge et la pression qu'ils exercent sur les parois d'une enceinte ; par exemple, dans un réacteur en forme de U muni à la base d'un diffuseur, le niveau supérieur du lit fluidisé sera le même dans chaque branche du U. Ces lits fluidisés sont donc caractérisés par une grande homogénéité de température, de concentration en particules, etc. ce qui est dû à la mobilité des particules. Ils ont, en outre, l'avantage de permettre des intensités de transfert de matière ou d'énergie élevées, car les collisions des particules les unes sur les autres détruisent continuellement la couche limite qui entoure la particule et qui nuit à l'échange thermique, de sorte que les transferts de chaleur et de masse entre gaz et solide y sont particulièrement rapides. En outre, la régulation du débit des particules solides est facile à réaliser, avec pour conséquence un contrôle aisé de la réaction dans laquelle intervient le matériau solide, soit comme matière première, soit comme catalyseur.

Il est, bien entendu, nécessaire de pouvoir échantillonner pour contrôler soit en continu, soit à intervalles réguliers, les caractéristiques des particules du lit fluidisé, car, d'une part, elles sont généralement friables et risquent donc de s'éroder, d'autre part, des dépôts de sous-produits peuvent se produire à leur surface et modifier leurs propriétés, notamment dans le cas où elles interviennent comme catalyseur. De même, il peut s'avérer nécessaire de remplacer en continu ou à intervalles réguliers une partie des particules en suspension et, par conséquent, de les évacuer de l'enceinte à lit fluidisé.

Dans ce but, le procédé le plus usuel et le plus simple consiste à mettre à profit les propriétés d'un lit fluidisé qui le rapprochent d'un liquide, en prévoyant un prélèvement à l'aide d'une conduite ascendante, montée en dérivation sur l'enceinte de ce lit fluidisé, et munie d'une vanne que l'on ouvre, puis que l'on ferme lors de chaque prélèvement, la suspension de particules étant poussée dans la conduite par la pression statique exercée sur la paroi. Lorsque cette vanne, située au-dessous de la surface supérieure du lit fluidisé, est ouverte, les particules tendent à s'écouler dans la conduite et peuvent ainsi être prélevées. Cette vanne s'use toutefois très rapidement, du fait du contact permanent de ses organes avec les particules très abrasives en mouvement désordonné.

La présente invention vise à remédier à cet inconvénient en proposant un système de prélèvement dans une enceinte, en continu ou en discontinu, de particules solides en lit fluidisé, qui permette de contrôler de façon précise le débit dans le conduit de prélèvement des particules, en principe sans utiliser de vanne constamment au contact des particules du lit fluidisé.

A cet effet, l'invention a pour objet un système pour le prélèvement dans une enceinte de particules solides en lit fluidisé, ce système comprenant un conduit ascendant de prélèvement, communiquant par son extrémité inférieure avec cette enceinte au-dessous du niveau supérieur du lit fluidisé et formant une extension du lit fluidisé de particules, ce système étant caractérisé en ce que ledit conduit comporte une restriction apte à limiter le débit du prélèvement, et en ce que des moyens sont prévus pour injecter un gaz comprimé, avec un débit réglable, dans ledit conduit, entre ladite enceinte et ladite restriction, en vue de permettre un contrôle précis du débit de soutirage du lit fluidisé.

En particulier, avec un débit de gaz suffisamment élevé, compte tenu des caractéristiques de la restriction du conduit, le gaz sous pression refoulera les particules du lit fluidisé dans ladite enceinte et permettra ainsi d'interrompre le prélèvement.

Ladite restriction pourra être constituée par un simple orifice ou par un manchon de faible diamètre, ou éventuellement par une vanne partiellement ouverte, dont la partie supérieure, de préférence située au-dessous de la surface supérieure du lit fluidisé, pourra avantageusement se terminer par un déversoir vers un système de soutirage ou de stockage, de façon connue en soi.

Lorsque le débit d'injection du gaz dans le conduit de prélèvement s'accroît, le soutirage des particules du lit fluidisé diminue et, inversement, il suffit d'abaisser le débit du gaz injecté pour accroître le soutirage. On dispose ainsi d'un moyen simple, n'impliquant pas l'utilisation d'une vanne directement et constamment en contact avec les particules abrasives pour régler en permanence le prélèvement des particules d'un lit fluidisé.

Le diamètre de la restriction dépend du débit maximum de soutirage souhaité. Dans la plupart des cas, le diamètre de cette restriction sera d'environ 0,01 à 0,5 fois le diamètre du conduit ascendant de prélèvement.

Le gaz injecté dans ce conduit sera de préférence le même que celui qui assure la fluidisation. Il pourra cependant, et selon les cas, être constitué par tout autre gaz compatible avec le but recherché.

Le contrôle du débit d'injection du gaz pourra ainsi être réalisé de diverses façons : soit par régulation du gaz de contrôle ; soit par la taille de la restriction du conduit (orifice, manchon ou vanne) ; soit enfin par régulation de la pression dans le récipient de stockage.

En outre, les modifications de la gamme du débit de soutirage des particules, pour répondre aux besoins du prélèvement, pourront se faire de façon simple : soit par remplacement du manchon proprement dit par un autre manchon de diamètre approprié ; soit en plaçant directement sur le conduit plusieurs manchons en parallèle disposant chacun d'une vanne de fermeture ; soit enfin par ouverture plus ou moins grande de la vanne de restriction.

Le conduit de prélèvement pourra comporter éventuellement, en amont ou en aval de la restriction, une ou plusieurs vannes de sécurité, mais le taux d'usure de celles-ci sera considérablement réduit par rapport aux systèmes de prélèvement actuellement utilisés, du fait que l'usage de ces vannes sera limité à leur fonction de sécurité.

Un tel système est particulièrement bien adapté, dans une unité de craquage catalytique d'hydrocarbures, au prélèvement en régime continu ou semi-continu de particules de catalyseur usé dans un régénérateur.

On sait, en effet, que l'industrie pétrolière utilise de façon usuelle des procédés de craquage, dans lesquels des molécules d'hydrocarbures à hauts poids moléculaire et à point d'ébullition élevé sont scindées en molécules plus petites, qui peuvent bouillir dans des domaines de températures plus faibles, convenant à l'usage recherché. Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est vaporisée et mise en contact à haute température avec un catalyseur de craquage, qui est maintenu en suspension dans les vapeurs de la charge. Après que l'on ait atteint par craquage la gamme de poids moléculaires désirée, avec un abaissement correspondant des points d'ébullition, le catalyseur est séparé des produits obtenus, strippé, régénéré par combustion du coke formé, puis remis en contact avec la charge à craquer.

Le catalyseur est généralement constitué de particules d'alumine, d'un diamètre moyen généralement compris entre 40 et 90 microns, sur lesquelles ont été déposés divers métaux.

Dans le régénérateur, on utilise de l'air pour fluidiser ces particules et pour brûler le coke qui s'y est déposé. La température de combustion peut être comprise entre 600° et 900°C et le débit de l'air injecté est de l'ordre de 0,1 à 1,0 t/h/m² de surface du diffuseur.

Il est important de pouvoir contrôler les conditions de régénération du catalyseur, et le système de prélèvement faisant l'objet de la présente invention s'applique particulièrement bien à une telle utilisation, en employant par exemple de l'air comprimé comme gaz injecté dans le conduit ascendant de prélèvement.

De façon analogue, ce dispositif peut être utilisé pour effectuer des prélèvements dans les réacteurs de reformage à lit fluidisé et dans les réacteurs d'hydrotraitement à lit fluidisé.

Toutes ces utilisations du système de prélèvement conforme à l'invention entrent dans le cadre de l'invention ; en particulier, la commande de ce prélèvement, par modulation du débit d'air injecté dans le conduit de soutirage, peut être automatisée et asservie à divers moyens de contrôle d'autres paramètres.

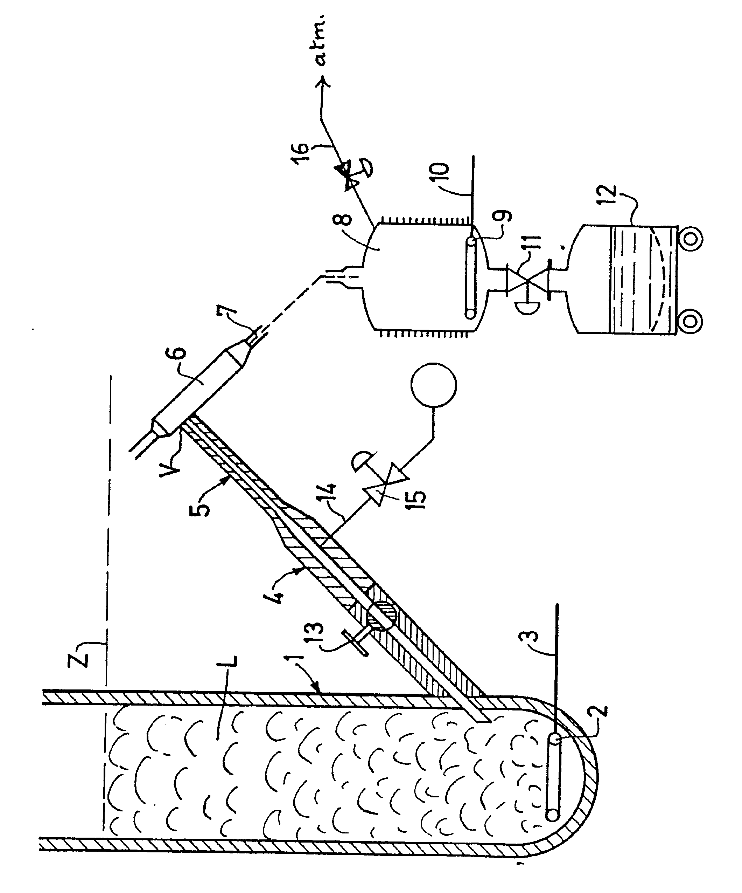

La figure unique du dessin schématique annexé illustre une forme de mise en oeuvre du dispositif de prélèvement conforme à l'invention.

Sur ce dessin, l'enceinte dans laquelle est maintenue une suspension en phase gazeuse, ou lit fluidisé L, de particules solides est désignée par la référence 1. A la base de cette enceinte, un diffuseur 2, alimenté en gaz comprimé, de l'air par exemple, par une ligne 3, est injecté avec un débit suffisant par réaliser un lit fluidisé bouillonnant. Un conduit ascendant 4 de prélèvement, disposé ici obliquement à environ 45° par rapport à l'enceinte 1, débouche à l'intérieur de celle-ci au-dessous du niveau supérieur Z du lit fluidisé. Le conduit 4 comporte une restriction, constituée ici par un manchon 5 de faible diamètre, apte à limiter le débit de prélèvement au-dessous d'un seuil prédéterminé.

Du fait de la position du conduit 4 au-dessous de la surface supérieure du lit fluidisé, les particules du lit fluidisé sont poussées par pression dans le conduit 4 et entraînées par le courant gazeux provenant du lit fluidisé ; elles tendent donc à s'écouler dans le réservoir ou déversoir 6, avec lequel le manchon 5 communique par exemple par un raccord en T. Le déversoir 6 communique lui-même avec une conduite d'évacuation 7, qui achemine les particules soutirées vers une capacité pressurisée 8, permettant de stocker la quantité de prélèvement requise. Les conditions de fluidisation ne sont pas réunies dans cette capacité 8 et il s'agit donc en principe d'un lit dense, sauf si on place à sa base un diffuseur 9 alimenté en gaz par la ligne 10, permettant de maintenir les particules en mouvement, et éventuellement de purger les gaz.

Cette capacité pressurisée 8 communique, sur cette figure, grâce à une vanne 11, avec une cellule amovible 12 de réception des particules prélevées ou, de façon connue en soi, avec tout système de convoyage pneumatique adapté.

Une vanne de sécurité 13 est prévue sur le conduit 4, entre l'enceinte 1 et une ligne 14 par laquelle est acheminé un gaz comprimé, de l'air par exemple, dont le débit est réglable au moyen d'une vanne 15. Ce débit peut, en particulier, être ajusté pour maintenir la température dans la ligne de prélèvement à une valeur prédéterminée, ou pour réguler le niveau du lit fluidisé par soutirage de catalyseur.

Le conduit 4 communiquant librement avec l'enceinte 1, les particules du lit fluidisé seront convoyées dans ce conduit par le gaz qui les maintient en suspension. Comme indiqué ci-dessus, la perte de charge provoquée par le manchon 5 permet de limiter le débit du prélèvement à une valeur maximale prédéterminée, lorsque le prélèvement de particules est continu. En ajustant le débit de gaz comprimé injecté par la ligne 14, ou en agissant sur la pression du récipient de réception 8 par la ligne 16, il est en outre possible de régler avec précision le débit prélevé au-dessous de cette valeur maximale, ou même d'effectuer des prélèvements en discontinu par arrêt du prélèvement quand l'air injecté par la vanne 15 excède le débit permis par la restriction. Dans ce cas, le catalyseur du lit fluidisé ne peut pas rentrer dans la conduite de soutirage et il est donc refoulé dans le lit fluidisé.

## Revendications

1. Système pour le prélèvement dans une enceinte (1) de particules solides en lit fluidisé, ce système comprenant un conduit ascendant (4) de prélèvement extérieur à l'enceinte (1), communiquant par son extrémité inférieure avec cette enceinte au-dessous du niveau supérieur du lit fluidisé et formant une extension de celui-ci, ce système étant caractérisé en ce que ledit conduit (4) comporte une restriction (5) apte à limiter le débit du prélèvement, et en ce que des moyens (14,15) sont prévus pour injecter un gaz comprimé, avec un débit réglable, dans ledit conduit (4), entre ladite enceinte (1) et ladite restriction (5), en vue de contrôler, par un réglage approprié du débit de gaz, la quantité de particules soutirée.

2. Système selon la revendication 1, caractérisé en ce que ladite restriction (5) est constituée par un manchon (5) de faible diamètre.

3. Système selon la revendication 2, caractérisé en ce que le diamètre de ladite restriction (5) est compris entre 0,01 et 0,5 fois le diamètre dudit conduit ascendant (4) de prélèvement.

4. Système selon l'une des revendications 1 à 3, caractérisé en ce que le gaz injecté dans ledit conduit (4) de prélèvement est le même que celui du lit fluidisé.

5. Système selon l'une des revendications 1 à 4, caractérisé en ce que le débit de soutirage des particules du lit fluidisé est diminué par augmentation du débit du gaz injecté.

6. Système selon l'une des revendications 1 à 5, caractérisé en ce que la restriction (5) apte à limiter le débit du prélèvement est constituée par un orifice, par un ou plusieurs manchons, ou par une vanne.

7. Système selon l'une des revendications 1 à 6, caractérisé en ce que ledit conduit de prélèvement (4) communique avec un déversoir (6) situé au-dessous du niveau supérieur du lit fluidisé de ladite enceinte (1).

8. Système selon la revendication 7, caractérisé en ce que ledit déversoir (6) communique avec des moyens de stockage (8,12).

9. Utilisation du système selon l'une des revendications 1 à 8, pour contrôler la régénération des particules de catalyseur dans un régénérateur d'une unité de craquage catalytique en lit fluidisé.

10. Utilisation du système selon l'une des revendications 1 à 8, pour contrôler l'état des particules de catalyseur dans une unité de reformage catalytique en continu ou dans une unité d'hydrotraitement d'hydrocarbures en lit fluidisé.

## Ansprüche

1. System zur Entnahme von Feststoffteilchen aus einer Feststoffteilchenwirbelschicht in einem Behälter, wobei ein ansteigender Entnahmekanal (4) außerhalb des Behälters (1) vorgesehen ist, welcher mit seinem unteren Ende mit dem Behälter (1) unterhalb des oberen Niveaus der Wirbelschicht kommuniziert und eine Erweiterung derselben bildet, dadurch **gekennzeichnet**, daß der Kanal (4) eine zur Begrenzung des Entnahmedurchsatzes geeignete Verengung (5) aufweist und Mittel (14, 15) zum Einblasen eines Druckgases mit einstellbarem Durchsatz in den Kanal (4) zwischen dem Behälter (1) und der Verengung (5) vorgesehen sind, um durch geeignete Einstellung des Gasdurchsatzes die abgezogene Teilchenmenge zu steuern.

2. System nach Anspruch 1, dadurch **gekennzeichnet**, daß die Verengung (5) aus einer Hülse (5) geringen Durchmessers besteht.

3. System nach Anspruch 2, dadurch **gekennzeichnet**, daß der Durchmesser der Verengung (5) zwischen dem 0,01- und 0,5-fachen des Durchmessers des ansteigenden Entnahmekanals (4) liegt.

4. System nach Anspruch 1, 2 oder 3, dadurch **gekennzeichnet**, daß es sich bei dem in den Entnahmekanal (4) eingeblasenen Gas um dasselbe handelt, welches auch in der Wirbelschicht verwendet wird.

5. System nach einem der Ansprüche 1 bis 4, dadurch **gekennzeichnet**, daß der Wirbelschichtfeststoffteilchenabzugsdurchsatz durch Erhöhung des Durchsatzes an eingeblasenem Gas vermindert wird.

6. System nach einem der Ansprüche 1 bis 5, dadurch **gekennzeichnet**, daß die zur Begrenzung des Entnahmedurchsatzes geeignete Verengung (5) aus einer Öffnung, einer oder mehreren Hülsen oder einem Ventil besteht.

7. System nach einem der Ansprüche 1 bis 6, dadurch **gekennzeichnet**, daß der Entnahmekanal (4) mit einem Überlauf (6) kommuniziert, welcher unterhalb des oberen Niveaus der Wirbelschicht des Behälters (1) angeordnet ist.

8. System nach Anspruch 7, dadurch **gekennzeichnet**, daß der Überlauf (6) mit Speichermitteln (8, 12) verbunden ist.

9. Verwendung des Systems nach einem der Ansprüche 1 bis 8 zur Kontrolle der Regenerierung der Katalysatorteilchen in einem Regenerator einer Einheit zum katalytischen Kracken in der Wirbelschicht.

10. Verwendung des Systems nach einem der Ansprüche 1 bis 8 zur Kontrolle des Zustandes der Katalysatorteilchen in einer Einheit zum kontinuierlichen katalytischen Reformieren oder in einer Einheit zur Wasserstoffbehandlung von Kohlenwasserstoffen in der Wirbelschicht.

## Claims

1. A system for withdrawing from an enclosure (1) samples of solid particles in a fluidised bed, said system comprising an ascending sampling duct (4) outside the enclosure (1), which communicates at its lower end with said enclosure (1) below the upper level of the fluidised bed and which forms an extension of the latter, said system being characterised in that said duct (4) comprises a constriction (5) for restricting the sampling flow rate, and in that means (14, 15) are provided for injecting a compressed gas, at an adjustable flow rate, into said duct (4) between said enclosure (1) and said constriction (5) for the purpose of controlling, by suitable adjustment of the flow rate of gas, the quantity of particles drawn off.

2. A system according to claim 1, characterised in that said constriction (5) comprises a sleeve (5) of small diameter.

3. A system according to claim 2, characterised in that the diameter of said constriction (5) is between 0.01 and 0.5 times the diameter of said ascending sampling duct (4).

4. A system according to any one of claims 1 to 3, characterised in that the gas injected into said sampling duct (4) is the same as that of the fluidised bed.

5. A system according to any one of claims 1 to 4, characterised in that the rate at which the particles are drawn off from the fluidised bed is reduced by increasing the flow rate of the injected gas.

6. A system according to any one of claims 1 to 5, characterised in that the constriction (5) for restricting the sampling flow rate is formed by an orifice, by one or more sleeves or by a valve.

7. A system according to any one of claims 1 to 6, characterised in that said sampling duct (4) communicates with an overflow means (6) disposed below the upper level of the fluidised bed of said enclosure (1).

8. A system according to claim 7, characterised in that said overflow means (6) communicates with storage means (8, 12).

9. Use of the system according to any one of claims 1 to 8 for monitoring the regeneration of catalyst particles in a regenerator of a fluidised bed catalytic cracking unit.

10. Use of the system according to any one of claims 1 to 8 for monitoring the state of the catalyst particles in a continuous catalytic reforming unit or in a unit for the hydrofining of hydrocarbons in a fluidised bed.

EP 0 313 437 B1